# EUROPÄISCHE PATENTSCHRIFT

(11) **EP 1 161 911 B1**
(45) Veröffentlichungstag und Bekanntmachung des Hinweises auf die Patenterteilung: **17.12.2003**
(21) Anmeldenummer: 01113199.2
(22) Anmeldetag: 30.05.2001
(51) Int. Cl.: A47J 27/21

(54) **Verriegelungsmechanismus für einen topfartigen Flüssigkeitsbehälter**
Closing mechanism for a pot-like fluid container
Mécanisme de fermeture pour un récipient apte à contenir des liquides

(30) Priorität: 07.06.2000 DE 10028125
(43) Veröffentlichungstag der Anmeldung: 12.12.2001
(73) Patentinhaber: BSH Bosch und Siemens Hausgeräte GmbH, 81669 München (DE)
(72) Erfinder: Obermaier, Markus Dipl.-Ing, 83365 Nussdorf (DE); Magg, Johannes Dipl.-Ing., 83368 St. Georgen (DE); Kramer, Siegmund, 83417 Kirchanschöring (DE); Sturm, Robert Dipl.-Ing, 83352 Altenmarkt (DE)

(56) Entgegenhaltungen:
- DE-A- 19 730 831
- DE-A- 19 905 641
- DE-U- 29 610 394

## Beschreibung

Die Erfindung betrifft einen Behälter zur Aufnahme einer Flüssigkeit mit einem Topf und mit einem an den Topf angelenkten Deckel, der schwenkbar zwischen einer die Topföffnung abdeckenden Stellung und einer die Topföffnung freigebenden Stellung ist, und der mittels eines federelastischen Elements zum Aufschwenken vorgespannt ist, und einer manuell betätigbaren Einrichtung zum Verriegeln des Deckels in seiner die Topföffnung abdeckenden Stellung, die eine an einem Griff des Behälters angeordnete Taste aufweist.

Ein derartiger Behälter, der sich insbesondere als elektrischer Wasserkocher eignet, ist aus der DE 197 30 831 A1 bekannt. Bei dem bekannten Behälter ist die manuell betätigbare Einrichtung zum Verriegeln des Deckels als Schieber ausgebildet, der in einem am Topf angebrachten Handgriff angeordnet ist. Der Schieber wird dabei mittels einer Feder in einer Position gehalten, in der er bei geschlossenem Deckel unter einen scharnierartigen Deckelabschnitt greift und den Deckel dadurch in seiner geschlossenen Stellung gegen ein Ausschwenken blockiert. Der Schieber kann aus dieser Verriegelungsstellung gegen die Federkraft auf einer am Handgriff vorgesehenen Gleitfläche mit dem Daumen einer den Handgriff umgreifenden Hand durch den Benutzer zurückgezogen werden, sodaß der Schieber aus seinem Eingriff mit dem schamierartigen Deckelabschnitt gelöst wird, wodurch der Deckel unter Wirkung einer Vorspannfeder selbsttätig in seine Offenstellung schwenkt. In dieser Deckelstellung kann der Behälter dann mit Flüssigkeit gefüllt werden. Zum Schließen des Deckels muß der Benutzer durch Druck auf den Deckel diesen gegen die Federkraft in seine die Topföffnung abdeckende Stellung bringen, wobei der Schieber dann wieder selbsttätig unter den scharnierartigen Deckelabschnitt einschnappt und den Deckel so blockiert.

Die schieberartige Ausführung der manuell betätigbaren Verriegelungseinrichtung beim bekannten Behälter kann jedoch dann, wenn der Daumen nicht exakt am Schieber angreift, zu einem Verkanten des Schiebers und damit zu einer Beschädigung des Verriegelungsmechanismus bzw. zu einem schwergängigen Betätigen führen. Darüber hinaus macht es die Schieberform der Verriegelungseinrichtung erforderlich, den Daumen zum Betätigen des Schiebers stark anzuwinkeln und ihn dann in dieser ergonomischen ungünstigen Haltung zum Öffnen des Schiebers einwärts zu biegen. Der Schieber als Verriegelungseinrichtung wird deshalb vom Benutzer als umständlich und anstrengend zu handhaben empfunden.

Aus dem Gebrauchsmuster DE 29610 394 U1 ist ein Deckelverriegelungsmechanismus für einen Wasserkocher bekannt, der eine im Deckel angeordnete Lösetaste zum Lösen des Deckels aufweist. Der Deckel kann durch einen Druck auf die Taste geöffnet werden, wobei der Wasserkocher auf einem festen Untergrund stehen sollte, um ein sicheres öffnen des Deckels zu gewährleisten.

Aufgabe der vorliegenden Erfindung ist es, ein Gerät der eingangs beschriebenen Art für den Benutzer bedienungsfreundlich auszugestalten und darüber hinaus für eine hohe Bediensicherheit und geringe Störanfälligkeit zu sorgen. Diese Aufgabe wird durch einen Behälter gemäß Anspruch 1 gelöst. Bevorzugte Ausführungsformen sind in den abhängigen Ansprüchen angegeben.

Gemäß der Erfindung ist bei einem Behälter zur Aufnahme einer Flüssigkeit die Taste der Einrichtung zum Verriegeln des Deckels in seiner die Topföffnung abdeckenden Stellung durch ein einen Griffquerschnitt reduzierendes Eindrücken betätigbar, um den Deckel frei zu geben.

Die Verwendung einer Taste zum Verriegeln bzw. Entriegeln des Deckels wird vom Benutzer als sehr bedienerfreundlich empfunden, da der Benutzer zum Betätigen der Taste nur kurz einen Finger auf die Taste auflegen und dann leicht zudrücken muß. Dieses senkrechte Eindrücken der Taste stellt jedoch eine ergonomisch sehr günstige Betätigungsart dar, die sich außerdem mit relativ geringem Kraftaufwand ausführen läßt. Das Eindrücken zum Betätigen der Taste erfordert es vom Benutzer nicht, den Daumen exakt auf der Taste aufzulegen. Weiterhin ist durch die im wesentlichen senkrechte Bewegungsrichtung der Taste auch ein Verkanten, das zu einem Blockieren der Verriegelungseinrichtung führen könnte, kaum möglich.

Gemäß einer bevorzugten Ausführungsform ist die Taste mit einer Klinke über ein Drehgelenk fest verbunden, wobei die Taste auf einem federelastischen Element aufliegt und von diesem vorgespannt wird und die Klinke sich bei geschlossenem Deckel in Eingriff mit dem Deckel befindet, um diesen zu verriegeln. Die in Form einer Wippe ausgestaltete Verriegelungseinrichtung, wobei die Taste die Wippenseite darstellt, die sich betätigen läßt, wohingegen die andere als Klinke ausgebildete Wippenseite in den Deckel eingreift, wenn dieser geschlossen ist, ermöglicht ein kostengünstiges Herstellen und Montieren der Verriegelungseinrichtung, die sich darüber hinaus durch eine geringe Störanfälligkeit auszeichnet.

Eine bevorzugte Ausführungsform der Erfindung wird in der nachfolgenden Beschreibung anhand der Zeichnungen näher erläutert. Es zeigen:
- Fig. 1: einen erfindungswesentlichen Ausschnitt eines Längsschnitts durch einen erfindungsgemäßen Behälter bei geschlossenem Deckel;
- Fig. 2: eine Detailansicht der Verriegelung des Deckels nach Fig. 1; und

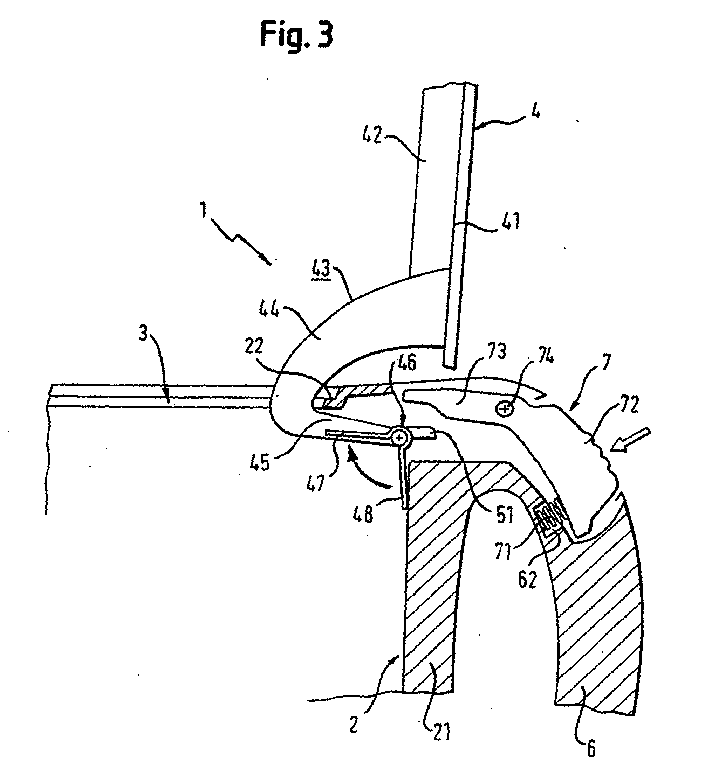

- Fig. 3: eine der Fig. 1 entsprechende Längsschnittansicht durch den erfindungsgemäßen Behälter bei geöffnetem Deckel.

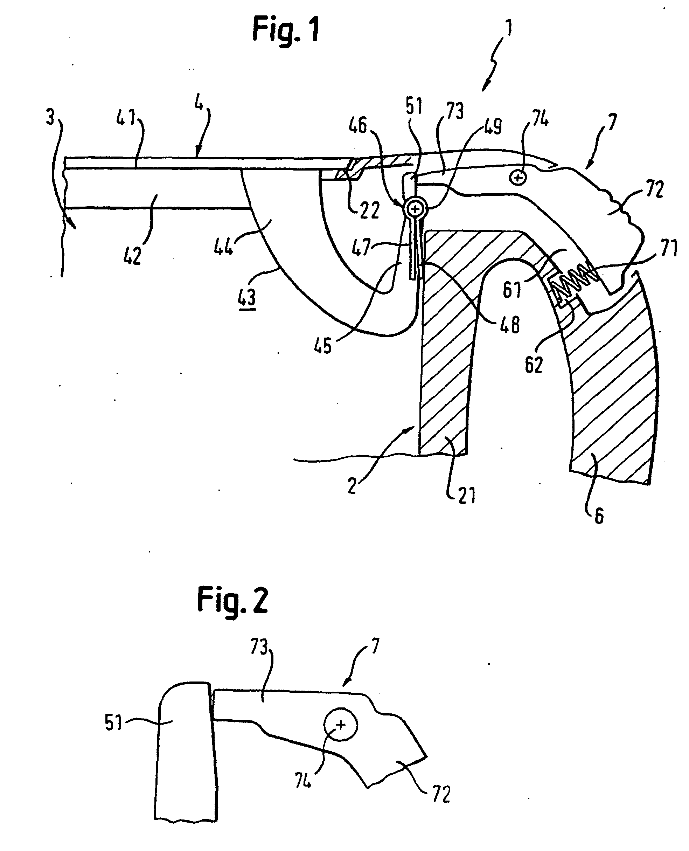

In Fig. 1 ist ein insgesamt mit dem Bezugszeichen 1 bezeichneter Flüssigkeitsbehälter abschnittsweise dargestellt, der als Wasserkocher dient. Der Wasserkocher 1 umfaßt einen Topf 2 zur Aufnahme der Flüssigkeit, von dem nur der obere Abschnitt einer Seitenwandung 21 gezeigt ist. Im Bereich des oberen Endes der dargestellten Topfseitenwandung ist ein Deckel 4 angelenkt. Dieser Deckel 4 dient dazu, in geschlossenem Zustand eine horizontale Öffnung 3 des Topfes zu verschließen. Der Deckel 4 weist eine obere Abdeckfläche 41 auf, die sich im wesentlichen über die gesamte horizontale Öffnung 3 des Topfes 2 erstreckt und so die Öffnung bei geschlossenem Deckel abdeckt. Bei der Ausführung des Flüssigkeitsbehälters als Wasserkocher kann in der dargestellten Topfseitenwandung gegenüberliegend eine Ausgießöffnung (nicht gezeigt) vorgesehen sein, die auch bei geschlossenem Deckel offen bleibt, sodaß Wasser aus dem Topf ausgegossen werden kann.

An der Innenseite der Abdeckfläche 41 des Deckels ist eine Stützkonstruktion 42 zum Tragen der Abdeckfläche vorgesehen, die in einem Randabschnitt der Abdeckfläche in einen Scharnierarm 43 übergeht. Dieser Schamierarm 43 ist im Querschnitt im wesentlichen U-förmig ausgestaltet, wobei der Schamierarm vom Randabschnitt der Abdeckfläche 41 ausgehend einen ersten nach außen und unten sich erstreckenden Armabschnitt 44 aufweist, der bogenförmig ausgestaltet ist und sich nach hinten verjüngt. An diesem Armabschnitt 44 schließt sich dann ein im wesentlichen keilförmiger, nahezu senkrecht nach oben sich erstreckender Armabschnitt 45 an, der in etwa in der Höhe der Abdeckfläche 41 endet.

An der Außenseite des zweiten Armabschnitts 45 ist eine Biegefeder 46 angeordnet. Diese Biegefeder 46 weist zwei Schenkel 47, 48 auf, die über einen gekrümmten Kopfbereich 49 miteinander verbunden sind. Die Biegefeder 46 ist dabei so ausgestaltet, daß sie im Ruhezustand im wesentlichen blattförmig aufgespannt ist, wodurch die beiden Schenkel 47 im wesentlichen in einer Ebene liegen. Der eine Schenkel 47 der Biegefeder 46 ist weiterhin fest am zweiten Armabschnitt 45 des Deckelscharnierarms 43 im wesentlichen parallel zu diesem angeordnet. Die Befestigung des Schenkels 47 der Biegefeder 46 am Deckelscharnierarm 43 kann dabei durch ein Einstecken des Schenkels in eine Tasche am Arm erreicht werden. Alternativ besteht auch die Möglichkeit, den Schenkel 47 der Biegefeder 46 fest in den Armabschnitt 45 des Deckelscharnierarms 43 einzugießen, wenn dieser aus Kunststoff gefertigt wird. Der zweite Schenkel 48 der Biegefeder 46 ist fest am oberen Endbereich der Topfwandung 2 befestigt, wobei auch hier der Schenkel 48 z. B. in einer Tasche am oberen Rand der Topfwandung eingesteckt sein kann. Die Biegefeder 46 legt mit ihrem Kopfbereich 49 den Schwenkbereich des Deckels 4 am Topf 2 fest.

An der Topfseitenwandung 21, an der der zweite Schenkel 48 der Biegefeder 46 angeordnet ist und die der Ausgießöffnung am Topf 2 des Wasserkochers 1 gegenüberliegt, ist weiterhin ein vorzugsweise bogenförmig ausgestalteter Griff 6 angeformt, der einstückig mit dem Topf ausgebildet sein kann. Im Übergangsbereich zwischen dem Topf 2 und dem Griff 6 ist eine Aussparung 61 vorgesehen, in der eine Deckelverriegelungseinrichtung 7 angeordnet ist. Die Deckelverriegelungseinrichtung 7 setzt sich aus einer Spiralfeder 71 einer Taste 72 und einer Klinke 73 zusammen. Die Taste 72 und die Klinke 73 stossen dabei in einem stumpfen Winkel aneinander und sind vorzugsweise einstückig ausgebildet. Die Taste 72 und die Klinke 73 sind an ihrem Verbindungsbereich weiterhin drehbar um eine Achse 74, die im Übergangsbereich zwischen dem Griff 6 und dem Topf 2 befestigt ist, gelagert. Die Taste 72 sitzt mit ihrer Unterseite auf einem Ende der Spiralfeder 71, die mit ihrem anderen Ende in einer Nut 62, die in der Aussparung 61 am Übergangsbereich zwischen dem Griff 6 und der Topfwandung 2 ausgebildet ist. Die Spiralfeder 71 ist dabei so ausgelegt, daß sie im unbelasteten Zustand die Taste 72 mit ihrer Oberseite über die Außenseite des Griffs 6 hinausdrückt. Die Oberseite der Taste 72 ist dabei in einen Abschnitt vorzugsweise geriffelt, um dem Finger des Benutzers, der die Taste betätigt, einen guten Halt zu geben.

Fig. 1 zeigt den Wasserkocher bei geschlossenem Deckel 4, bei dem die Verriegelungseinrichtung 7 den Deckel 4 in der die Topföffnung 3 abdeckenden Stellung blockiert. In der geschlossenen Deckelstellung liegt die Abdeckfläche 41 des Deckels 4 im wesentlichen waagrecht zur Topföffnung 3, wobei die Abdeckfläche 41 in ihrem Randbereich auf einem umlaufenden Absatz 22 am oberen Ende der Topfseitenwandung 2 anschlägt, wodurch eine Abdichtung erreicht wird. Im geschlosssenen Deckelzustand 4 erstreckt sich der Deckelscharnierarm 43 in das Innere des Topfes 2, wobei der zweite Armabschnitt 45 des Deckelscharnierarms 43 im wesentlichen parallel zur Topfseitenwandung 21 verläuft. In dieser Stellung sind die beiden Schenkel 47, 48 der Biegefeder 46 im wesentlichen parallel zueinander angeordnet, wodurch die Biegefeder 46 unter Vorspannung gesetzt wird. Im geschlossenen Deckelzustand stößt weiterhin eine über die Biegefeder 46 hinausragende Auskragung 51 des zweiten Armabschnitts 45 am Deckelscharnierarm 43 mit seiner Außenseite am vorderen Ende der Klinge 73 der Verriegelungseinrichtung 7 an:

Wie die Detailansicht in Fig. 2 zeigt, ist die Auskragung 51 am zweiten Armabschnitt 45 des Deckelscharnierarms 43 in ihrem Außenbereich leicht abgeschrägt, wodurch die Auskragung leichter unter der Klinke 73 der Verriegelungseinrichtung 7 durchgeschoben werden kann. Die Drehachse 74 der Wippe aus Klinge 73 und Taste 72 ist dabei so angeordnet, daß die Auskragung 51 am zweiten Armabschnitt 45 des Deckelscharnierarms 43 beim Zudrücken des Deckels 4 im Anschrägebereich der Klinke 73 anschlägt, wobei die Klinke 73 gegen die Druckkraft der Spiralfeder 71, die auf die Taste 72 wirkt, angehoben wird, sodaß sich die Auskragung 51 an der Klinke 73 vorbeischiebt. In dieser Sellung bei geschlossenem Deckel 4 hemmt der Angriff der Klinke 73 der Verriegelungseinrichtung 7 an der Außenseite der Auskragung 51 den durch die Spannung der Biegefeder 46 ausgelösten Schwenkvorgang des Deckelschamierarms 43, sodaß der Deckel zuverlässig in seiner geschlossenen Stellung verbleibt, auch dann, wenn z. B. durch unsachgemäßes Benutzen der Wasserkocher 1 umkippt und so der Wasserdruck im Topf gegen die Deckelinnenseite drückt, wodurch zusätzlicher Druck für ein Aufschwenken des Deckels 4 entsteht.

Die Anschrägung der Auskragung 51 am zweiten Armabschnitt 45 des Deckelscharnierarms 43 an der Stelle, an der die Klinke 73 der Verriegelungseinrichtung 7 bei geschlossenem Deckel angreift, ermöglicht es auch zuverlässig, ein Leerspiel des Deckels 4 auszugleichen. Durch die Anschrägung der Auskragung 51 wird gewährleistet, daß die Spiralfeder 71 der Verriegelungseinrichtung 7 über die Taste 72 die Klinke 73 bei geschlossenem Deckel immer soweit nach unten auf die Auskragung 51 am Deckelscharnierarm 43 drücken kann, bis die Klinke 73 anschlägt und dadurch den Deckel 4 blockiert.

Zum Öffnen des Deckels 4 muß ein Benutzer nur einen Finger seiner Hand, z. B. seinen Daumen, auf die Taste 71 der Verriegelungseinrichtung 7 legen und diese gegen die Haltekraft der Spiralfeder 71 nach innen in die Aussparung 61 im Griff 6 drücken. Durch diesen Tastdruck wird die Klinke 73 von der Auskragung 51 am zweiten Armabschnitt 45 des Deckelscharnierarms 43 weg nach oben gezogen ist, wodurch die Auskragung 51 vollständig freigegeben und die Hemmung der Schwenkbewegung des Deckels 4, die durch die Biegefeder 46 bewirkt wird, aufgehoben ist. Der Deckel 4 wird dann durch die Vorspannung der Biegefeder 46 geöffnet, wobei der Schwenkwinkel des Deckels 4 durch den Anschlag der Innenseite des zweiten Armabschnitts 45 am Anschlag 21 an der Topfwandung 2 festgelegt wird.

Zum Entriegeln des Deckels 4 muß der Benutzer also nur leicht auf die Taste 72 der Verriegelungseinrichtung 7 drücken. Er kann hierzu auch den Daumen seiner den Griff 6 umfassenden Hand benutzen, sodaß eine Einhand-Bedienung des Wasserkochers möglich ist. Sobald der Benutzer den Druck von der Taste 72 der Verriegelungseinheit 7 wieder wegnimmt, schwenkt diese selbsttätig in ihre Ausgangsstellung zurück, wobei die Taste 72 zuverlässig durch die Spiralfeder 71, die sich in der Nut 62 bewegt, geführt wird.

Zum Schließen des Deckels 4 muß der Benutzer dann lediglich den geöffneten Deckel 4 nach unten drücken. Beim Zuschwenken des Deckels 4 schlägt die Auskragung 51 am zweiten Armabschnitt 45 des Deckelscharnierarms 43 dann wieder gegen das vordere Ende der Klinke 43 der Verriegelungseinrichtung 7 und hebt diese gegen die Haltekraft der Spiralfeder 71, die die Taste 72 festhält, an, sodaß die Auskragung 51 an der Klinke vorbeigeschoben wird. Die Klinke 73 hemmt dann wieder die Schwenkbewegung, die von der Spannung der Biegefeder 46 bei geschlossenem Deckel auf den Scharnierarm 43 ausgeübt wird.

## Patentansprüche

1. Behälter zur Aufnahme einer Flüssigkeit mit einem Topf (2) und einem an den Topf angelenkten Deckel (4), der schwenkbar zwischen einer eine Topföffnung (3) abdeckenden Stellung und einer die Topföffnung (3) freigebenden Stellung ist und der mittels eines federelastischen Elements (46) zum Aufschwenken vorgespannt ist und mit einer manuell betätigbaren Einrichtung (7) zum Verriegeln des Deckels (4) in seiner die Topföffnung abdeckenden Stellung, die eine an einem Griff (6) des Behälters angeordnete Taste (72) aufweist, **dadurch gekennzeichnet, daß** die Taste (72) durch ein einen Griffquerschnitt reduzierendes Eindrücken betätigbar ist, um den Deckel (4) freizugeben.

2. Behälter nach Anspruch 1, **dadurch gekennzeichnet, daß** die Einrichtung (7) zum Verriegeln des Deckels (4) weiter eine Klinke (73) aufweist, die in einer Wirkverbindung /84) mit der Taste (72) steht, wobei die Klinke sich im Eingriff mit dem Deckel (4) in der die Topföffnung abdeckenden Stellung befindet, wenn die Taste (72) nicht gedrückt ist.

3. Behälter nach Anspruch 2, **dadurch gekennzeichnet, daß** die Taste (72) und die Klinke (73) über ein am Topf (2) gelagertes Drehgelenk (46) miteinander verbunden sind, wobei die Taste (72) auf einem federelastischen Element (71) aufliegt.

4. Behälter nach Anspruch 3, **dadurch gekennzeichnet, daß** die Einrichtung (7) zum Verriegeln des Deckels (4) in einem Griff (6) am Topf (2) angeordnet ist, wobei das federelastische Element (71) in einer Nut (62) im Griff geführt ist.

5. Behälter nach einem der Ansprüche 2 bis 5, **dadurch gekennzeichnet, daß** der Deckel (4) einen Scharnierarm (43) aufweist, der mit einer Biegefeder (46) drehbar am Topf (2) angelenkt ist, wobei eine über der Anlenkstelle hinausstehende Auskragung (51) des Scharnierarms (43) bei geschlossenem Deckel an der Klinke (73) der Einrichtung (7) zum Verriegeln des Deckels (4) anschlägt.

6. Behälter nach Anspruch 5, **dadurch gekennzeichnet, daß** die Auskragung (51) des Scharnierarms (43) in dem Bereich, in dem die Klinke (73) bei geschlossenem Deckel anschlägt, abgeschrägt ist.

## Claims

1. Container for reception of a liquid, comprising a pot (2) and a lid (4), which is articulated to the pot and pivotable between a setting covering a pot opening (3) and a setting freeing the pot opening (3) and which is biased by means of a resilient element (46) for pivotation open, and a manually actuable device (7) for locking the lid (4) in its setting covering the pot opening, the device comprising a button (52) arranged at a handle (6) of the container, c haracterised in t hat the button (72) is a ctuable to release t he lid (4) b y pressing in such as to reduce the handle cross-section.

2. Container according to claim 1, **characterised in that** the device (7) for locking the lid (4) further comprises a latch (73) disposed in an operative connection / 84) with the button (72), wherein the latch is disposed in engagement with the lid (4) in the setting covering the pot opening when the button (52) is not pressed.

3. Container according to claim 2, **characterised in that** the button (72) and the latch (73) are connected together by way of a rotary joint (46) joumalled at the pot (2), wherein the button (72) rests on a resilient element (71).

4. Container according to claim 3, **characterised in that** the device (7) for locking the lid (4) is arranged in a handle (6) at the pot (2), wherein the resilient element (71) is guided in a groove (62) in the handle.

5. Container according to one of claims 2 to 5, **characterised in that** the lid (4) comprises a hinge arm (43) which is rotatably articulated at the pot (2) by a bending spring (46), wherein a protection (51 ), which protrudes beyond the articulation point, of the hinge arm (43) abuts against the latch (73) of the device (7) for locking the lid (4) when the lid is closed.

6. Container according to claim 5, **characterised in that** the projection (51) of the hinge arm (43) is chamfered in the region in which the latch (73) abuts when the lid is closed.

## Revendications

1. Récipient destiné à contenir un liquide, doté d'un pot (2) et d'un couvercle (4) articulé contre ce pot, capable de basculer entre une position de recouvrement d'un orifice du pot (3) et une position de dégagement de l'orifice du pot (3) et pré-tendu à l'aide d'un élément élastique du type ressort (46) destiné au basculement vers le haut et doté également d'un dispositif (7) actionnable manuellement pour verrouiller le couvercle (4) dans sa position de recouvrement de l'orifice du pot et présentant une touche (72) disposée contre une poignée (6) du récipient, et **caractérisé en ce que** la touche (72) peut être actionnée par enfoncement réduisant une section transversale de la poignée, pour dégager le couvercle (4).

2. Récipient selon la revendication 1, **caractérisé en ce que** le dispositif (7) destiné à verrouiller le couvercle (4) présente également une clenche (73) en liaison active (84) avec la touche (72), ladite clenche étant engagée avec le couvercle (4) dans la position de recouvrement de l'orifice du pot lorsque la touche (72) n'est pas enfoncée.

3. Récipient selon la revendication 2, **caractérisé en ce que** la touche (72) et la clenche (73) sont reliées l'une à l'autre par l'intermédiaire d'une articulation pivotante (46) suspendue contre le pot (2), la touche (72) reposant sur un élément élastique du type ressort (71).

4. Récipient selon la revendication 3, **caractérisé en ce que** le dispositif (7) de verrouillage du couvercle (4) est disposé dans une poignée (6) située contre le pot (2), l'élément élastique du type ressort (71) ayant été guidé dans une rainure (62) de la poignée.

5. Récipient selon une des revendications 2 à 5, **caractérisé en ce que** le couvercle (4) présente un bras de charnière (43) articulé avec un ressort lamellaire (46) de manière à pouvoir pivoter contre le pot, un ergot (51) du bras de charnière (43) faisant saillie au-delà du point d'articulation lorsque le couvercle est fermé, venant buter contre la clenche (73) du dispositif (7) de verrouillage du couvercle (4).

6. Récipient selon la revendication 5, **caractérisé en ce que** l'ergot (51) du bras de charnière (43) est biseautée dans la zone percutée par la clenche (73) lorsque le couvercle est fermé.
